# EUROPEAN PATENT APPLICATION

(11) **EP 1 955 909 A1**
(43) Date of publication of application: **13.08.2008**
(21) Application number: 06832951.5
(22) Date of filing: 20.11.2006
(51) Int. Cl.: B60R 21/20, B60R 16/02, B62D 1/04, B62D 1/11

(54) **AIRBAG DEVICE AND STEERING WHEEL**

(30) Priority: 28.11.2005 JP 2005342637
(71) Applicant: TAKATA CORPORATION, Minato-ku, Tokyo 106-8510 (JP)
(72) Inventor: NAKAZAWA, Wataru, Tokyo 106-8510 (JP); TSUJIMOTO, Kei, Tokyo 106-8510 (JP)
(74) Representative: Vossius & Partner
(86) International application number: PCT/JP2006/323101
(87) International publication number: WO 2007/060912

(57) **Abstract**

[Object] To provide an airbag apparatus and a steering wheel that allow for improved operation feel of a horn.

[Solving Means] An airbag apparatus includes an airbag unit 2 that is tiltable in a pressing direction when a cover 13 is pressed, a supporting plate 3 fixed to a steering wheel, three springs 4A, 4B, and 4C disposed between the airbag unit 2 and the supporting plate 3 and biasing the airbag unit 2, and three horn switches 5A, 5B, and 5C whose positions substantially coincide with those of the springs 4A, 4B, and 4C. The springs 4 and the horn switches 5 are disposed in a manner such that, when the horn switches 5 are turned on by pressing near positions of the cover 13 directly above the horn switches 5, the distances between axes serving as tilting fulcrums for the airbag unit 2 and the horn switches 5 proximate to the pressing positions are substantially equal to each other.

## Description

### Technical Field

The present invention relates to an airbag apparatus installed in a vehicle or the like, and particularly, to an airbag apparatus having a horn switch for use in a driver's seat, and a steering wheel having such an airbag apparatus.

### Background Art

A typical driver's seat airbag apparatus installed in a steering wheel includes a retainer, an airbag having the peripheral edge of its gas inlet attached to the retainer, a cover for covering the folded airbag, and an inflator for generating gas. When the inflator is actuated and generates gas, the airbag is inflated and thus breaks open the cover, whereby the airbag deploys widely into the vehicle cabin.

A known example of a driver's seat airbag apparatus is such that, when the cover of the airbag apparatus is pressed, a horn switch becomes turned on, causing the horn to be honked. In this case, there is a type where the entire airbag apparatus moves in the pressing direction and a type where only the cover moves in the pressing direction.

In related art, as an aforementioned type where the entire airbag apparatus moves in the pressing direction, the following airbag apparatus is known. Specifically, this airbag apparatus includes a retainer, a gas-generating inflator fixed to the retainer, a folded airbag, and a cover that covers the folded airbag. The airbag apparatus further includes an airbag unit that moves in the pressing direction when the cover is pressed, a supporting plate (supporting base) fixed to the steering wheel, biasing means disposed between the airbag unit and the supporting plate and for biasing the airbag unit, and a horn switch that is turned on when the airbag unit moves in response to the pressing of the cover (for example, see Patent Document 1).

Patent Document 1: Japanese Patent No. 3175621

### Disclosure of Invention

### Problems to be Solved by the Invention

In the related art described above, a basic configuration of a steering wheel is disclosed, in which the horn is honked in response to turning on of the horn switch caused when the entire airbag unit is moved in the pressing direction due to pressing of the cover. In order to enhance the performance of the steering wheel, further improvements in the operation feel of the horn are required.

An object of the present invention is to provide an airbag apparatus and a steering wheel that allow for improved operation feel of a horn.

### Means for Solving the Problems

In order to achieve the aforementioned object, a first invention provides an airbag apparatus that includes a movable member having an airbag and a cover that covers the airbag in a folded state, the movable member being movable in a pressing direction when the cover is pressed; a supporting plate fixed to a steering wheel; a plurality of biasing means disposed between the movable member and the supporting plate and for biasing the movable member; and a plurality of horn switches that are turned on in response to movement of the movable member. Pressing forces required for pressing positions of the cover proximate to the respective horn switches in order to turn on the horn switches are substantially equal to each other.

In the first invention, when an occupant presses the cover, the movable member having the cover is moved in the pressing direction. This turns on a horn switch, whereby the horn is honked. Generally, occupants tend to press near the edges of the cover. For this reason, since horn switches are often disposed near the edges of the cover, when an edge of the cover is to be pressed, there is a high possibility that a position proximate to the corresponding horn switch will be pressed.

In the first invention, the biasing means and the horn switches are disposed in a manner such that, no matter which horn switch position is pressed among the plurality of horn switches, the pressing force required on the position of the cover proximate to the horn switch for turning on the horn switch will always be substantially the same. Specifically, no matter which position of the cover corresponding to any of the horn switches the occupant may press, the operational load required for honking the horn will always be substantially the same. In this case, since there is a high possibility that the occupant pressing the cover will press near a horn switch, the operational load to be applied by the occupant for honking the horn can be substantially equalized in the first invention. As a result, the operation feel of the horn can be improved.

In order to achieve the aforementioned object, a second invention provides an airbag apparatus that includes a movable member having an airbag and a cover that covers the airbag in a folded state, the movable member being tiltable in a pressing direction when the cover is pressed; a supporting plate fixed to a steering wheel; a plurality of biasing means disposed between the movable member and the supporting plate and for biasing the movable member; and a plurality of horn switches that are turned on in response to movement of the movable member. When the horn switches are turned on by pressing positions of the cover proximate to the respective horn switches, distances between axes serving as tilting fulcrums for the movable member and the horn switches proximate to the respective pressing positions of the cover are substantially equal to each other.

In the second invention, when an occupant presses the cover, the movable member having the cover is tilted in the pressing direction. This turns on a horn switch, whereby the horn is honked. Generally, occupants tend to press near the edges of the cover. For this reason, since horn switches are often disposed near the edges of the cover, when an edge of the cover is to be pressed, there is a high possibility that a position proximate to the corresponding horn switch will be pressed.

In the second invention, the biasing means and the horn switches are disposed in a manner such that, no matter which horn switch position of the cover is pressed among the plurality of horn switches, the distance between the tilting fulcrum of the movable member and the horn switch proximate to the pressing position will always be substantially the same. Specifically, no matter which position of the cover corresponding to any of the horn switches the occupant may press to tilt the movable member, the distance between the corresponding axis of rotation and the horn switch proximate to the pressing position will always be substantially the same.

Based on the principle of leverage, the longer the distance between a pressing point and an axis of rotation, the smaller the pressing force on the cover required for turning on a horn switch. In other words, a pressing force required depends on the distance between a pressing point and an axis of rotation. Therefore, when the biasing forces of the plurality of biasing means are equal to each other, the pressing forces at respective pressing points will be the same if the distances from the pressing points to the axes of rotation are the same. According to the second invention, no matter which position of the cover corresponding to any of the horn switches the occupant may press to tilt the movable member, the operational load can be substantially equalized. Since there is a high possibility that the occupant pressing the cover will press near a horn switch, the operational load to be applied by the occupant for honking the horn can be substantially equalized in the second invention. As a result, the operation feel of the horn can be improved.

In the second invention, the distances between the axes serving as tilting fulcrums for the movable member and the horn switches proximate to the respective pressing positions are substantially equal to each other in a state where the plurality of biasing means all have substantially the same biasing force, whereby the pressing force to be applied on the cover by the occupant can be substantially equalized. Consequently, since a single type of biasing means (a single type of spring) can be used for the plurality of biasing means, simplified configuration and cost reduction can be achieved.

A third invention is characterized in that, in the first invention, the biasing means include three biasing means, and the horn switches include three horn switches.

Accordingly, with respect to the airbag apparatus in which the movable member is supported at three points with the three biasing means, the operation feel of the horn can be improved.

A fourth invention is characterized in that, in the second invention, the biasing means include three biasing means, and the horn switches include three horn switches.

Accordingly, with respect to the airbag apparatus in which the movable member is supported at three points with the three biasing means, the operation feel of the horn can be improved.

A fifth invention is characterized in that, in the first invention, the biasing means include four biasing means, and the horn switches include four horn switches.

Accordingly, with respect to the airbag apparatus in which the movable member is supported at four points with the four biasing means, the operation feel of the horn can be improved.

A sixth invention is characterized in that, in the second invention, the biasing means include four biasing means, and the horn switches include four horn switches.

Accordingly, with respect to the airbag apparatus in which the movable member is supported at four points with the four biasing means, the operation feel of the horn can be improved.

A seventh invention is characterized in that, in any one of the third to sixth inventions, an axis serving as a tilting fulcrum for the movable member includes one support position at which the movable member is supported by the biasing means.

Generally, with respect to the movable member supported at three points with three biasing means, when one of left and right positions of the cover proximate to the corresponding horn switches is pressed, the movable member is tilted about an axis including (the support position by) the biasing means at the other one of the left and right positions as an axis of rotation. In the seventh invention, the operation feel of the horn can be improved with respect to an airbag apparatus having such a configuration.

An eighth invention is characterized in that, in one of the third and fourth inventions, an axis serving as a tilting fulcrum for the movable member includes two support positions at which the movable member is supported by the biasing means.

Generally, with respect to the movable member supported at three points with three biasing means, when a position of the cover proximate to the corresponding horn switch excluding the left and right positions of the cover is pressed, the movable member is tilted about an axis including (the support positions by) the left and right biasing means as an axis of rotation. In the eighth invention, the operation feel of the horn can be improved with respect to an airbag apparatus having such a configuration.

A ninth invention is characterized in that, in the first invention, the movable member is an airbag unit, the airbag unit including the airbag, an inflator configured to inflate the airbag, and the cover.

Accordingly, with respect to the airbag apparatus in which the entire airbag unit moves in response to pressing of the cover by an occupant, the operation feel can be improved.

A tenth invention is characterized in that, in the second invention, the movable member is an airbag unit, the airbag unit including the airbag, an inflator configured to inflate the airbag, and the cover.

Accordingly, with respect to the airbag apparatus in which the entire airbag unit moves in response to pressing of the cover by an occupant, the operation feel can be improved.

An eleventh invention is characterized in that, in the first invention, the movable member is the cover.

Accordingly, with respect to the airbag apparatus in which the cover moves in response to pressing of the cover by an occupant, the operation feel can be improved.

A twelfth invention is characterized in that, in the second invention, the movable member is the cover.

Accordingly, with respect to the airbag apparatus in which the cover moves in response to pressing of the cover by an occupant, the operation feel can be improved.

In order to achieve the aforementioned object, a thirteenth invention provides a steering wheel that includes the airbag apparatus according to the first invention and a steering-wheel body.

In order to achieve the aforementioned object, a fourteenth invention provides a steering wheel that includes the airbag apparatus according to the second invention and a steering-wheel body.

### Advantages

According to the present invention, the operation feel of a horn can be improved.

### Best Mode for Carrying Out the Invention

An airbag apparatus and a steering wheel according to an embodiment of the present invention will be described below with reference to the drawings.

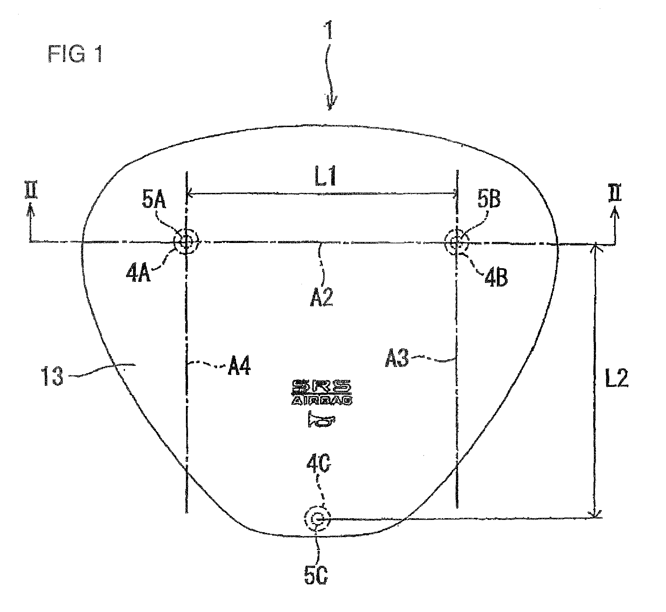

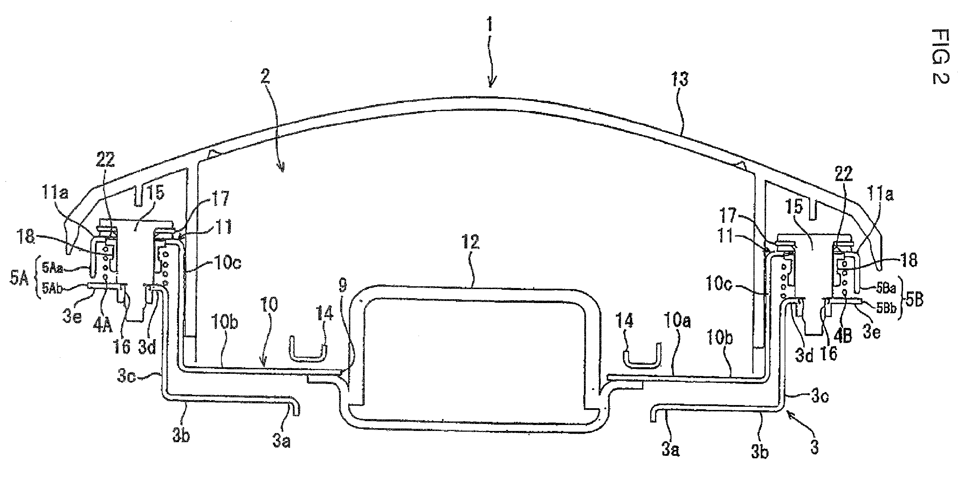

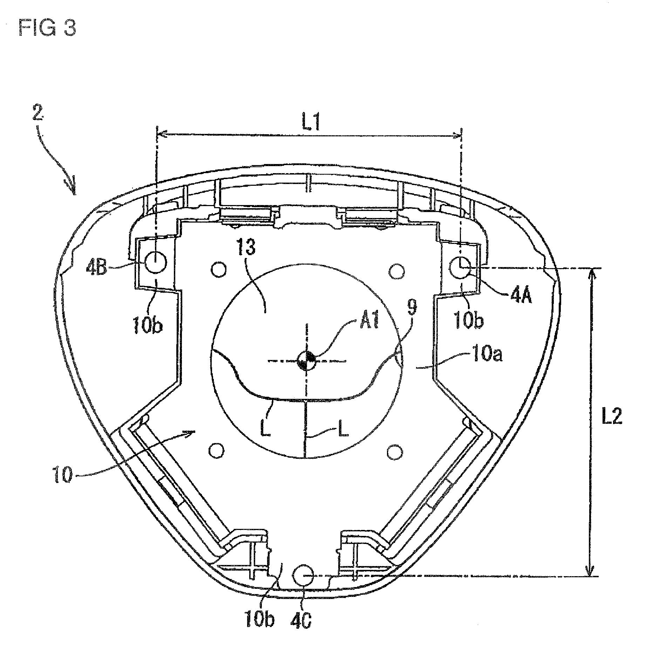

Fig. 1 is a top view showing the entire structure of an airbag apparatus according to an embodiment of the present invention. Fig. 2 is a cross-sectional view taken along line II-II in Fig. 1. Fig. 3 is a bottom view showing the entire structure of an airbag unit included in the airbag apparatus according to the embodiment of the present invention (but not showing an inflator).

In Figs. 1 to 3, reference numeral 1 denotes an airbag apparatus mounted on a steering-wheel body of a steering wheel of an automobile, which is not shown. Although the steering wheel is generally used in an inclined state at a predetermined angle, the following description will be made based on that the front surface of the airbag apparatus 1 (i.e. the front side in Fig. 1 and the upper side in Fig. 2) is defined as an upper side, and the rear surface of the airbag apparatus 1 (i.e. the lower side in Fig. 2 and the front side in Fig. 3) is defined as a lower side. Furthermore, the terms "radial direction" and "axial direction" refer to a radial direction and an axial direction with respect to an axis A1 of the steering wheel (see Fig. 3).

The airbag apparatus 1 includes an airbag unit 2 (movable member), a supporting plate 3 disposed below the airbag unit 2 and fixed to the steering-wheel body, multiple (three in this embodiment) springs 4 (4A, 4B, and 4C) disposed between the supporting plate 3 and the airbag unit 2, and multiple (three in this embodiment) horn switches 5 (horn switches indicated by 5A, 5B, and 5C respectively corresponding the springs 4A, 4B, and 4C) whose center positions substantially coincide with those of the springs 4 (biasing means). The springs 4A, 4B, and 4C all have the same strength (spring constant).

The airbag unit 2 includes a retainer 10 serving as a base element, a bag-shaped airbag (not shown), an inflator 12 that emits gas to inflate the airbag, a cover 13 composed of, for example, resin for covering the folded airbag, and a ring member 14 for fixing the airbag and the inflator 12 to the retainer 10.

Although not shown, a vehicle equipped with the airbag apparatus 1 has various types of sensors that detect an occurrence of (or predict an occurrence of) a collision (including a side collision) or a rollover of the vehicle. Based on detection signals from these sensors, an inflator control circuit activates an initiator of the inflator 12.

The retainer 10 has substantially a polygonal flat plate shape, and includes a base plate portion 10a having a fitting hole 9 for the inflator 12 at substantially a central position, base portions 10b extending outward in the radial direction from the base plate portion 10a, and erect portions 10c bent and extended upward (toward the cover surface) from the base portions 10b. Furthermore, the edges of the retainer 10 are provided with three arm portions 11 extending outward in the radial direction from upper ends of the corresponding erect portions 10c. Outer ends of the arm portions 11 in the radial direction serve as arm ends 11a that are integrally provided with movable contacts 5a constituting the horn switches 5. The retainer 10 and the arm portions 11 are formed integrally using an electrically conductive material such as a metal plate.

Each of the arm portions 11 is provided with a bolt through-hole 22. Bolts 15 are inserted downward into these bolt through-holes 22 from above and are fastened to fastening holes 16 of the supporting plate 3.

The supporting plate 3 includes a base plate portion 3a having substantially a quadrangular frame shape, base portions 3b extending outward in the radial direction from the base plate portion 3a, erect portions 3c bent and extended upward (toward the cover surface) from the base portions 3b, and arm portions 3d extending outward in the radial direction from upper ends of the corresponding erect portions 3c. Specifically, three arm portions 3d are provided in correspondence to the arm portions 11 provided in the retainer 10. Outer ends of the arm portions 3d in the radial direction serve as arm ends 3e that are integrally provided with stationary contacts 5b constituting the horn switches 5. The base plate portion 3a, the base portions 3b, the erect portions 3c, and the arm portions 3d are formed integrally using an electrically conductive material such as a metal plate.

The aforementioned fastening holes 16 are provided in the arm ends 3e of the arm portions 3d at positions corresponding to the bolt through-holes 22. The inner periphery of each fastening hole 16 is threaded, so that the bolt 15 inserted through the corresponding bolt through-hole 22 can be fastened to the fastening hole 16.

Each of the bolts 15 is inserted through a washer 17 before being inserted through the corresponding bolt through-hole 22. Furthermore, before being fastened to the fastening holes 16, the bolts 15 are inserted through bushes 18 and the springs 4 that are disposed between the arm portions 11 of the retainer 10 and the arm portions 3d of the supporting plate 3. Accordingly, the bolts 15 and the fastening holes 16 fastened together restrict the movement of the airbag unit 2, such that the airbag unit 2 is prevented from being separated from the supporting plate 3 by a predetermined distance or more. At the same time, the airbag unit 2 is biased upward with respect to the supporting plate 3 by means of the three springs 4 (4A, 4B, and 4C) disposed at the same positions as the bolts 15. When an occupant presses the cover 13 (downward), the entire airbag unit 2 can be moved or tilted in the pressing direction (downward in Fig. 2) against the biasing force of the springs 4.

The horn switches 5 (5A, 5B, and 5C) are respectively constituted by the movable contacts 5a (5Aa, 5Ba, and 5Ca) provided at the arm ends 11a of the arm portions 11 of the retainer 10, and by the stationary contacts 5b (5Ab, 5Bb, and 5Cb) provided at the arm ends 3e of the arm portions 3d of the supporting plate 3. In other words, when an occupant presses the cover 13 and causes the airbag unit 2 to move or tilt downward, the movable contacts 5a and the stationary contacts 5b come into contact with each other, thereby turning on the horn switches 5.

In the airbag apparatus 1 having the basic configuration described above, the most significant characteristic of this embodiment is in the layout of the springs 4 and the horn switches 5. This characteristic will be described with reference to Fig. 1.

As shown in Fig. 1, the spring 4A is disposed at an upper left side of the drawing, the spring 4B at an upper right side, and the spring 4C at a lower side. In this embodiment, the springs 4A, 4B, and 4C are disposed in a manner such that a distance L1 between (the center of) the spring 4A and (the center of) the spring 4B is substantially equal to a distance L2 between an axis A2 extending through the springs 4A and 4B and (the center of) the spring 4C. As a result, since the center positions of the springs 4A, 4B, and 4C substantially coincide with the center positions of the respective horn switches 5A, 5B, and 5C as mentioned above, a distance (approximate to the distance L1) between (the center of) the spring 4A and (the center of) the horn switch 5B is substantially equal to a distance (approximate to the distance L2) between the axis A2 extending through the springs 4A and 4B and (the center of) the horn switch 5C.

In the airbag apparatus 1 having such a configuration, when an occupant presses the cover 13 downward, the airbag unit 2 is moved or tilted downward, thus causing the movable contacts 5a provided at the arm portions 11 of the retainer 10 to come into contact with the stationary contacts 5b provided at the arm portions 3d of the supporting plate 3. This turns on the horn switches 5, whereby the horn is honked. In this case, for example, if the occupant presses near a position of the cover 13 directly above the horn switch 5A, the airbag unit 2 becomes tilted about an axis A3 as an axis of rotation (tilting fulcrum), the axis A3 extending through the spring 4B (namely, the center position thereof, and the same applies hereinafter) and being orthogonal to the axis A2. As a result, the horn switch 5A becomes turned on. On the other hand, for example, if the occupant presses near a position of the cover 13 directly above the horn switch 5B, the airbag unit 2 becomes tilted about an axis A4 as an axis of rotation (tilting fulcrum), the axis A4 extending through the spring 4A and being orthogonal to the axis A2. As a result, the horn switch 5B becomes turned on. On the other hand, for example, if the occupant presses near a position of the cover 13 directly above the horn switch 5C, the airbag unit 2 becomes tilted about the axis A2 as an axis of rotation (tilting fulcrum), the axis A2 extending through the springs 4A and 4B. As a result, the horn switch 5C becomes turned on.

In an emergency situation such as a vehicle collision, the sensors detect the emergency, and the initiator of the inflator 12 receives an activation signal from the inflator control circuit, whereby the initiator becomes activated. The inflator 12 is thus actuated and emits gas for inflating the airbag, thereby inflating the airbag. In this case, the cover 13 is ruptured along a tear line L (see Fig. 3) formed on the rear surface thereof, so as to allow the airbag to be deployed towards the occupant.

The airbag apparatus 1 of this embodiment having the above-described configuration and performing the above-described operation has the following advantages.

Specifically, in this embodiment, when an occupant presses the cover 13, the airbag unit 2 is moved or tilted in the pressing direction and thus causes the corresponding horn switch 5 to be turned on, whereby the horn is honked. Generally, occupants tend to press near the edges of the cover 13. For this reason, since the horn switches 5 in the airbag apparatus 1 according to this embodiment are disposed near the edges of the cover 13 as mentioned above, when an edge of the cover 13 is to be pressed, there is a high possibility that a position proximate to the corresponding horn switch 5 will be pressed.

In this embodiment, as described above, the springs 4 and the horn switches 5 are disposed in a manner such that, no matter which horn switch position is pressed, the distance between the tilting fulcrum of the airbag unit 2 and the horn switch 5 proximate to the pressing position will always be substantially the same. Specifically, no matter which position of the cover 13 corresponding to any of the horn switches 5 (i.e. position directly above any one of the horn switches 5A, 5B, 5C) the occupant may press to tilt the airbag unit 2, the distance between the corresponding tilting fulcrum (axis of rotation) of the airbag unit 2 and the horn switch 5 proximate to the pressing position will always be substantially the same. A pressing force on the cover 13 required for turning on a horn switch 5 has an inversely proportional relationship with the distance from an axis of rotation to a pressing point on the basis of the principle of leverage. Specifically, the longer the distance from an axis of rotation to a pressing point, the smaller a pressing force required. In other words, a pressing force required depends on the distance from an axis of rotation to a pressing point. Therefore, if the distance from the axis of rotation to the pressing point is the same, the pressing force required will also be substantially the same. Accordingly, in this embodiment, no matter which position on the cover 13 corresponding to any of the horn switches 5 (5A, 5B, and 5C) the occupant may press to tilt the airbag unit 2, the operational load can be substantially equalized. When the occupant presses the cover 13 as described above, it is highly possible that the occupant will press a position proximate to a horn switch 5. According to this embodiment described above, the pressing force (operational load) to be applied on the cover 13 when an occupant desires to honk the horn can be substantially equalized. As a result, the operation feel of the horn can be improved.

In addition, in this embodiment, the pressing force (operational load) to be applied on the cover 13 when an occupant desires to honk the horn can be substantially equalized with the use of the three springs 4A, 4B, and 4C having the same strength (spring constant). Accordingly, the capability to use a single type of spring for the three springs 4A, 4B, and 4C contributes to simplified configuration and cost reduction.

Although the above-described embodiment is directed to an example where the present invention is applied to an airbag apparatus of a three-point supporting structure in which the airbag unit 2 is supported with three springs 4, the present invention is not limited to such an example. For example, the present invention can be applied to an airbag apparatus of a four-point supporting structure in which the airbag unit 2 is supported with four springs 4.

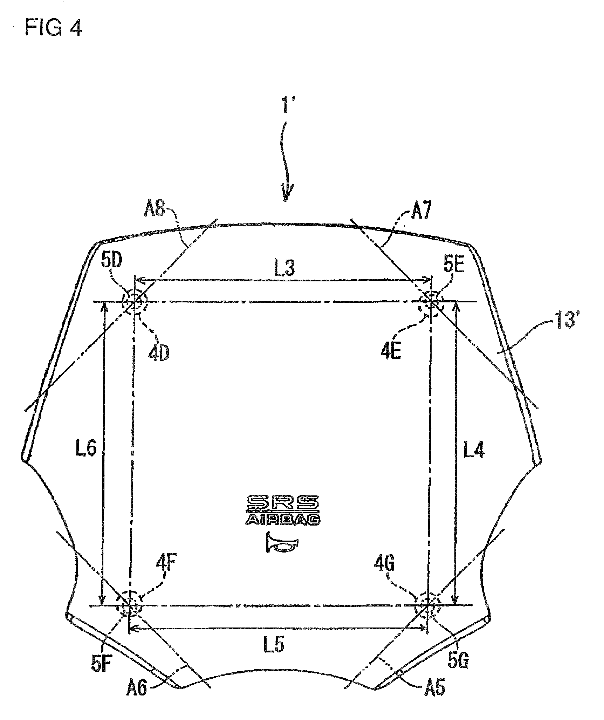

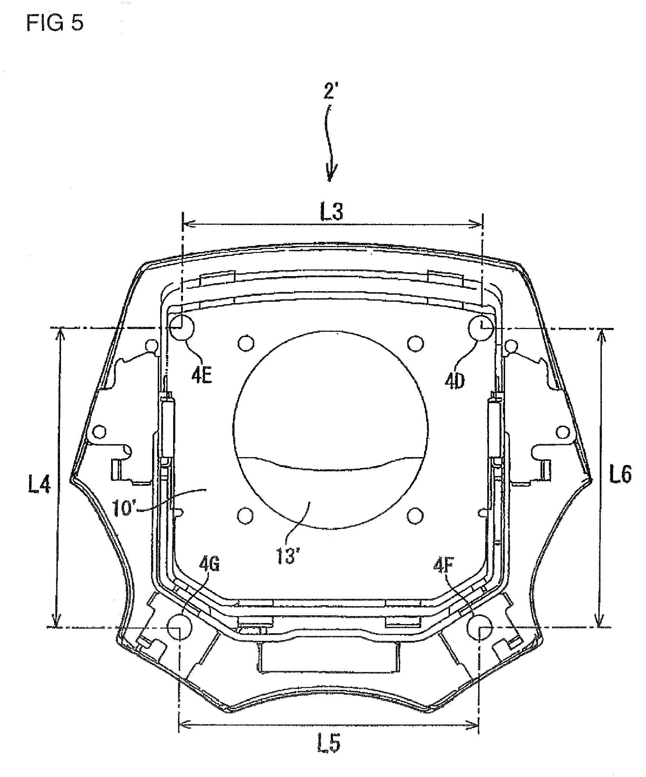

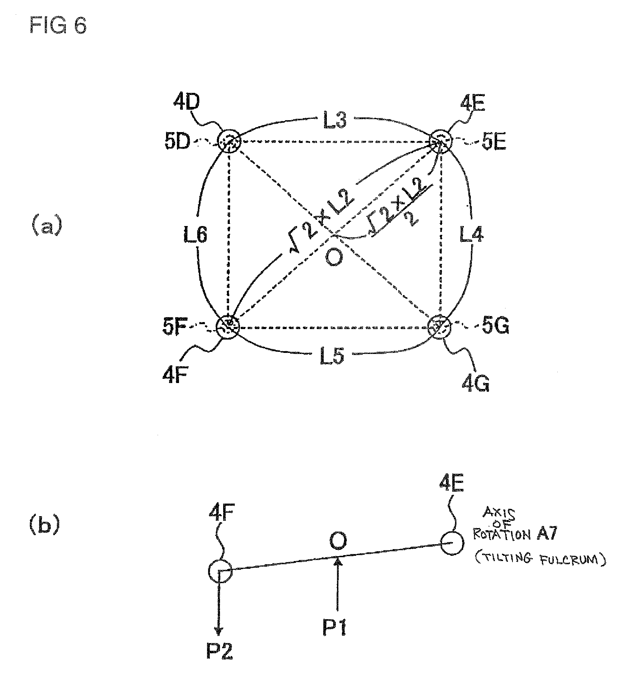

Fig. 4 is a top view showing the entire structure of an airbag apparatus 1' of a four-point supporting structure according to a modified example. Fig. 5 is a bottom view showing an airbag unit 2' included in the airbag apparatus 1' (but not showing an inflator). Fig. 6 includes diagrams illustrating that an operational load to be applied for honking the horn is constant in this modified example.

In this modified example, a retainer 10' and a supporting plate 3' (not shown) have disposed therebetween four springs 4 (4D, 4E, 4F, and 4G) that support the airbag unit 2' (see Fig. 5) in a movable or tiltable manner with respect to the supporting plate 3', not shown. Furthermore, four horn switches 5 (horn switches indicated by 5A, 5B, 5C, and 5D respectively corresponding to the springs 4A, 4B, 4C, and 4D) are provided such that center positions thereof substantially coincide with those of the springs 4 (4D, 4E, 4F, and 4G).

As shown in Fig. 4, the four springs 4 include the spring 4D disposed at an upper left side of the drawing, the spring 4E at an upper right side, the spring 4F at a lower left side, and the spring 4G at a lower right side. As shown in Figs. 4 and 5, in this modified example, the springs 4D, 4E, 4F, and 4G are disposed in a manner such that a distance L3 between (the center of) the spring 4D and (the center of) the spring 4E, a distance L4 between (the center of) the spring 4E and (the center of) the spring 4G, a distance L5 between (the center of) the spring 4G and (the center of) the spring 4F, and a distance L6 between (the center of) the spring 4F and (the center of) the spring 4D are all substantially equal to each other. In other words, the springs 4D, 4E, 4F, and 4G are disposed at respective corners of a substantial square. In this case, as mentioned above, the center positions of the springs 4D, 4E, 4F, and 4G substantially coincide with the center positions of the respective horn switches 5A, 5B, 5C, and 5D. As a result, a distance of a diagonal line between the spring 4D and the horn switch 5G, a distance of a diagonal line between the spring 4E and the horn switch 5F, a distance of a diagonal line between the spring 4F and the horn switch 5E, and a distance of a diagonal line between the spring 4G and the horn switch 5D are substantially equal to each other.

With the airbag apparatus 1' having this configuration, when an occupant presses a cover 13' downward, the airbag unit 2' is moved or tilted downward. This turns on the corresponding horn switch 5, whereby the horn is honked. In this case, for example, if the occupant presses near a position of the cover 13' directly above the horn switch 5D, the airbag unit 2' becomes tilted about an axis A5 as an axis of rotation (tilting fulcrum), the axis A5 extending through the spring 4G (namely, the center position thereof, and the same applies hereinafter) and being parallel to an axis including the springs 4E and 4F. As a result, the horn switch 5D becomes turned on. On the other hand, for example, if the occupant presses near a position of the cover 13' directly above the horn switch 5E, the airbag unit 2' becomes tilted about an axis A6 as an axis of rotation (tilting fulcrum), the axis A6 extending through the spring 4F and being parallel to an axis including the springs 4D and 4G. As a result, the horn switch 5E becomes turned on. If the occupant presses, for example, near a position of the cover 13' directly above the horn switch 5F, the airbag unit 2' becomes tilted about an axis A7 as an axis of rotation (tilting fulcrum), the axis A7 extending through the spring 4E and being parallel to an axis including the springs 4D and 4G. As a result, the horn switch 5F becomes turned on. If the occupant presses, for example, near a position of the cover 13' directly above the horn switch 5G, the airbag unit 2' becomes tilted about an axis A8 as an axis of rotation (tilting fulcrum), the axis A8 extending through the spring 4D and being parallel to an axis including the springs 4E and 4F. As a result, the horn switch 5G becomes turned on.

Similar to the above, in this modified example, the springs 4 and the horn switches 5 are disposed in a manner such that, no matter which horn switch position on the cover 13' is pressed, the distance between the tilting fulcrum of the airbag unit 2' and the horn switch 5 proximate to the pressing position will always be substantially the same. Specifically, no matter which position of the cover 13' corresponding to any of the horn switches 5 (5D, 5E, 5F, and 5G) the occupant may press to tilt the airbag unit 2', the distance between the corresponding tilting fulcrum of the airbag unit 2' and the horn switch 5 proximate to the pressing position will always be substantially the same.

A pressing force on the cover 13' required for turning on a horn switch 5 in this modified example is as shown in Fig. 6. Part (a) in Fig. 6 illustrates a relationship among a tilting fulcrum, a point of action of a pressing force, and an intermediate point therebetween. Part (b) in Fig. 6 illustrates forces acting on a point of action and an intermediate point. As shown in Fig. 6, when the occupant presses, for example, near a position of the cover 13' directly above the horn switch 5F, a reaction force P1 from the springs 4D and 4G acting in a (upward) direction opposite to the pressing direction is exerted on an intermediate point O that is distant from the axis of rotation A7 serving as a tilting fulcrum by (√2 × L2)/2. In this case, if a pressing force required for turning on the horn switch 5F is defined as P2, the aforementioned force relationship is the same no matter which position corresponding to any of the horn switches 5 (5D, 5E, 5F, and 5G) is pressed for honking the horn. This is because the springs 4 (horn switches 5) are disposed in a substantial square pattern in this modified example. Accordingly, in this modified example, no matter which position of the cover 13' corresponding to any of the horn switches 5 the occupant may press to tilt the airbag unit 2', the pressing force (operational load) on the cover 13' can be substantially equalized. Accordingly, similar to the above embodiment, the operation feel of the horn can be improved.

The expression that the pressing force (operational load) on the cover 13 (cover 13') can be substantially equalized implies that pressing forces (operational loads) required for pressing the positions of the cover 13 (cover 13') corresponding to the horn switches 5 in order to honk the horn are kept within a range above and below a preset reference value by about 10%. In this case, the preset reference value (i.e. a value of 100%) is a predetermined intermediate value between a maximum value and a minimum value of pressing forces applied for pressing the horn switch positions, and may be, for example, an average value of all the pressing forces or an average value between the maximum value and the minimum value of the pressing forces.

Although the reference value varies depending on the weight of the airbag unit, the reference value is set at, for example, about 20N in the case of a typical airbag unit having an average weight. In this case, in the present invention, a pressing force to be applied for pressing each of the horn switch positions can be set within a range of about 18N to 22N.

Alternatively, the expression that the pressing force (operational load) on the cover 13 (cover 13') can be substantially equalized may imply that the maximum value among pressing forces (operational loads) required for pressing the positions of the cover 13 (cover 13') corresponding to the horn switches 5 to honk the horn is within 1.25 times the minimum value.

In the above description, the expression that an occupant presses a position of the cover 13 (cover 13') corresponding to a horn switch 5 (i.e. near a position directly above a horn switch 5) includes an error range that generally occurs when an occupant tries to press a position of the cover 13 (cover 13') directly above a horn switch 5.

Although the embodiment and the modified example have been described above on the basis of a configuration where each of the horn switches 5 is turned on when the entire airbag unit 2 or 2' is moved or tilted in response to pressing of the cover 13 or 13' by an occupant, the present invention is not limited to such a configuration. For example, the present invention may be applied to an airbag apparatus in which the cover itself is supported with the springs in a movable or tiltable manner and in which movable contacts provided in the cover come into with stationary contacts provided in the supporting plate or the like when an occupant presses the cover. In that case, the operation feel of the horn can be advantageously improved as in the embodiment and the modified example described above.

Furthermore, although the above-described embodiment and modified example are configured such that the plurality of springs used have the same strength (spring constant) and that the operational load on the horn is made substantially constant by adjusting the layout of these springs, the present invention is not limited to such a configuration. For example, the operational load on the horn can be substantially equalized alternatively by appropriately setting the strengths (spring constants) of the plurality of springs. As a further alternative, the operational load on the horn can be substantially equalized by combining these two, namely, by appropriately setting the strengths (spring constants) of the springs and adjusting the layout of the springs.

### Brief Description of the Drawings

[Fig. 1] Fig. 1 is a top view showing the entire structure of an airbag apparatus according to an embodiment of the present invention.
[Fig. 2] Fig. 2 is a cross-sectional view taken along line II-II in Fig. 1 and showing the entire structure of the airbag apparatus according to the embodiment of the present invention.
[Fig. 3] Fig. 3 is a bottom view showing the entire structure of an airbag unit included in the airbag apparatus according to the embodiment of the present invention.
[Fig. 4] Fig. 4 is a top view showing the entire structure of an airbag apparatus of a four-point supporting structure to which the present invention is applied.
[Fig. 5] Fig. 5 is a bottom view showing an airbag unit included in the airbag apparatus of a four-point supporting structure to which the present invention is applied.
[Fig. 6] Fig. 6 includes diagrams illustrating that an operational load to be applied for honking a horn is constant in the airbag apparatus of a four-point supporting structure to which the present invention is applied. Reference Numerals

- 1: airbag apparatus
- 2: airbag unit (movable member)
- 3: supporting plate
- 4A, 4B, 4C: spring (biasing means)
- 4D, 4E, 4F, 4G: spring (biasing means)
- 5: horn switch
- 12: inflator
- 13: cover (movable member)
- A2, A3, A4: axis of rotation (axis serving as tilting fulcrum)
- A5, A6, A7, A8: axis of rotation (axis serving as tilting fulcrum)

## Claims

1. An airbag apparatus comprising:
a movable member having an airbag and a cover that covers the airbag in a folded state, the movable member being movable in a pressing direction when the cover is pressed;
a supporting plate fixed to a steering wheel;
a plurality of biasing means disposed between the movable member and the supporting plate and for biasing the movable member; and
a plurality of horn switches that are turned on in response to movement of the movable member,
wherein pressing forces required for pressing positions of the cover proximate to the respective horn switches in order to turn on the horn switches are substantially equal to each other.

2. An airbag apparatus comprising:
a movable member having an airbag and a cover that covers the airbag in a folded state, the movable member being tiltable in a pressing direction when the cover is pressed;
a supporting plate fixed to a steering wheel;
a plurality of biasing means disposed between the movable member and the supporting plate and for biasing the movable member; and
a plurality of horn switches that are turned on in response to movement of the movable member,
wherein when the horn switches are turned on by pressing positions of the cover proximate to the respective horn switches, distances between axes serving as tilting fulcrums for the movable member and the horn switches proximate to the respective pressing positions of the cover are substantially equal to each other.

3. The airbag apparatus according to Claim 1, wherein the biasing means comprise three biasing means, and the horn switches comprise three horn switches.

4. The airbag apparatus according to Claim 2, wherein the biasing means comprise three biasing means, and the horn switches comprise three horn switches.

5. The airbag apparatus according to Claim 1, wherein the biasing means comprise four biasing means, and the horn switches comprise four horn switches.

6. The airbag apparatus according to Claim 2, wherein the biasing means comprise four biasing means, and the horn switches comprise four horn switches.

7. The airbag apparatus according to any one of Claims 3 to 6, wherein an axis serving as a tilting fulcrum for the movable member includes one support position at which the movable member is supported by the biasing means.

8. The airbag apparatus according to one of Claims 3 and 4, wherein an axis serving as a tilting fulcrum for the movable member includes two support positions at which the movable member is supported by the biasing means.

9. The airbag apparatus according to Claim 1, wherein the movable member comprises an airbag unit, the airbag unit including the airbag, an inflator configured to inflate the airbag, and the cover.

10. The airbag apparatus according to Claim 2, wherein the movable member comprises an airbag unit, the airbag unit including the airbag, an inflator configured to inflate the airbag, and the cover.

11. The airbag apparatus according to Claim 1, wherein the movable member comprises the cover.

12. The airbag apparatus according to Claim 2, wherein the movable member comprises the cover.

13. A steering wheel comprising:
the airbag apparatus according to Claim 1; and
a steering-wheel body.

14. A steering wheel comprising:
the airbag apparatus according to Claim 2; and
a steering-wheel body.
